# EUROPÄISCHE PATENTSCHRIFT

(11) **EP 3 423 265 B1**
(45) Veröffentlichungstag und Bekanntmachung des Hinweises auf die Patenterteilung: **14.02.2024**
(21) Anmeldenummer: 17711999.7
(22) Anmeldetag: 27.01.2017
(51) Int. Cl.: B29D 30/06, B29C 35/00

(54) **REIFENHEIZPRESSE**
TIRE HEATING PRESS
PRESSE À CHAUD POUR PNEUMATIQUES

(30) Priorität: 29.02.2016 DE 102016002532
(43) Veröffentlichungstag der Anmeldung: 09.01.2019
(73) Patentinhaber: Harburg-Freudenberger Maschinenbau GmbH, 21079 Hamburg (DE)
(72) Erfinder: ZIMMERMANN, Arne, 21717 Deinste (DE)
(74) Vertreter: Klickow & Wetzel PartGmbB
(86) Internationale Anmeldenummer: PCT/DE2017/000015
(87) Internationale Veröffentlichungsnummer: WO 2017/148459

(56) Entgegenhaltungen:
- EP-A1- 2 308 662
- EP-A1- 2 567 808
- EP-A2- 0 143 089
- WO-A1-2015/165430
- CN-Y- 201 012 528
- JP-A- S63 221 018
- US-A- 3 870 443
- US-A- 4 370 283
- US-A1- 2010 007 038
- US-A1- 2010 278 950
- US-B2- 7 156 629

## Beschreibung

Die Erfindung betrifft eine Vorrichtung zur Vulkanisierung von Reifenrohlingen, die mindestens eine beheizbare Form zur Aufnahme des Reifenrohlings aufweist und die mindestens eine steuerbare Zufuhreinrichtung für ein Heizmedium aufweist, die mit mindestens einem Ventil versehen ist.

Bei der Herstellung von Reifen wird eine Mehrzahl von Produktionsschritten durchlaufen. In einem ersten Produktionsschritt werden üblicherweise extrudierte Streifen aus einem elastomeren Material auf einer Reifenaufbautrommel zu einem Reifenrohling zusammengefügt. Dies erfolgt häufig unter Verwendung von drahtartigen Verstärkungseinlagen aus Stahl, um sogenannte Stahlgürtelreifen herstellen zu können.

Der Reifenrohling wird dann in eine Heizpresse überführt und hier in eine beheizbare Form eingesetzt und typischerweise mit einem Innendruck beaufschlagt. In der Regel ist sowohl die den Reifenrohling aufnehmende Form beheizbar als auch ein Heizmedium in den Reifenrohling einführbar, um diesen bei der Vulkanisierung mit einem Innendruck zu beaufschlagen, der zu einer Stabilisierung der vorgegebenen Reifenkontur beiträgt.

Als Heizmedien können unterschiedliche Substanzen verwendet werden. Verbreitet ist die Verwendung von Wasserdampf, heißem Wasser oder heißem Stickstoff. Typischerweise wird das Heizmedium über pneumatisch angesteuerte Ventile dem Vulkanisationsprozess zugeführt. In der Regel werden sogenannte monostabile Ventile verwendet. Zum Einsatz kommen insbesondere Ventile, die in einem Grundzustand geschlossen sind oder die in einem Grundzustand offen sind. Im Bereich einer Zufuhr des Heizmediums werden häufig Ventile verwendet, die in einem Grundzustand geschlossen sind. Das Steuermedium drückt hierbei die Ventile zur Überführung in einen geöffneten Zustand entgegen einer Federkraft auf. Für den Fall einer Notabschaltung und/oder bei einem Ausfall des Steuerdruckes werden die Ventile durch die Federkraft in einen geschlossenen Zustand überführt. Im Auslassbereich werden typischerweise Ventile verwendet, die in einem Grundzustand offen sind. Hier drücken die Federn somit bei einem Druckausfall die Ventile in die geöffnete Positionierung. Hierdurch wird gewährleistet, dass der druckbeaufschlagte Raum gegen die Umgebung entlüftet wird und hierdurch drucklos und somit gefahrlos ist.

Bekannt ist ebenfalls bereits die Verwendung von elektrisch gesteuerten Ventilen. Diese Ventile sind jedoch häufig hinsichtlich der realisierbaren Schaltzeiten langsam. Darüber hinaus können diese Ventile häufig nicht einen vorgegebenen Grundzustand in einer geöffneten oder geschlossenen Positionierung realisieren.

Nachteilig ist ebenfalls, dass bei einer größeren Nennweite der Ventile eine Reduzierung des Druckes des Heizmediums zu befürchten ist. Schließlich treten häufig auch relativ große erforderliche Betätigungskräfte auf.

Bei einem typischen Reifenherstellungsprozess wird häufig in Fabrikationshallen eine Vielzahl von Reifenheizpressen betrieben. Bei pneumatisch gesteuerten Ventilen sind sehr komplexe Rohrleitungsführungen für die Zuführung der unter Druck stehenden Gase erforderlich. Durch Leckagen und sonstige Undichtigkeiten tritt bei derartigen pneumatischen Einrichtungen insgesamt häufig ein Verlust bis zu etwa 80 Prozent der eingesetzten Druckluft auf. Es muss somit deutlich mehr Druckluft bereitgestellt werden, als für die eigentlichen Steuervorgänge benötigt wird. Hierdurch werden größere und somit teurere Kompressoren erforderlich, oder die Anzahl der Kompressoren muss mit entsprechendem Kostenaufwand erhöht werden. Die Kosten betreffen hierbei nicht nur die reinen Gerätekosten, sondern ebenfalls die Betriebskosten.

Aus der EP 2 308 662 A1 ist bereits eine Presse zum Vulkanisieren von Reifenrohlingen bekannt, bei der eine beheizbare Form zur Aufnahme des Reifenrohlings mit einer steuerbaren Zufuhreinrichtung für ein Heizmedium versehen ist. Die Zufuhreinrichtung ist mit einem Ventil versehen.

Eine ähnliche Vorrichtung zum Vulkanisieren von Reifenrohlingen wird auch in der EP 2 567 808 A1 offenbart.

In der EP 0 143 089 A2 werden in allgemeiner Art und Weise pneumatische und hydraulische Betätigungsvorrichtungen beschrieben. Es wird insbesondere auch erläutert, dass hydraulische Vorrichtungen die Erreichung von hohen Regelgeschwindigkeiten ermöglichen und deshalb kurze Schaltzeiten aufweisen.

In der US 7156629 B2 wird bereits eine Vorrichtung zur Vulkanisierung von Reifenrohlingen beschrieben. Die entsprechende Vorrichtung ist mit einer beheizbaren Form zur Aufnahme des Reifenrohlings ausgestattet. Zur Temperierung der Form wird ein Heizmedium verwendet, für das eine steuerbare Zufuhreinrichtung mit einem Ventil vorgesehen ist. Das Ventil ist mit einem Steuerventil gekoppelt.

Aufgabe der vorliegenden Erfindung ist es, die Steuerung der Zufuhr des Heizmediums bei Aufrechterhaltung der technischen Qualität effektiver zu gestalten.

Diese Aufgabe wird durch die Merkmale des unabhängigen Anspruchs 1 gelöst.

Versorgungseinrichtungen für flüssige Fluide lassen sich wesentlich effektiver gegenüber einer Umgebung abdichten, als Versorgungs- und Verteileinrichtungen für gasförmige Fluide. In entsprechenden Leitungssystemen für flüssige Fluide treten deshalb in der Regel deutlich geringere Leckageverluste auf als in entsprechenden Einrichtungen für gasförmige Fluide.

Eine exakte Vorgabe der Ventilpositionierung erfolgt erfindungsgemäß dadurch, dass die Positioniereinrichtung eine Kolben-Zylinder-Anordnung aufweist.

Zur Bereitstellung erforderlicher Volumenströme und erforderlicher Drücke ist erfindungsgemäß beansprucht, dass zur Förderung des flüssigen Fluids sowie für einen Druckaufbau eine Pumpe verwendet wird.

Ein ausreichender Vorrat an flüssigem Fluid wird erfindungsgemäß dadurch bereitgestellt, dass die Pumpe mit einem Tank gekoppelt ist.

Eine einfache und zugleich äußerst zuverlässige Ansteuerung kann dadurch realisiert werden, dass mindestens eines der Ventile mit einem Steuerventil gekoppelt ist.

Zur Erhöhung der Anlagensicherheit wird vorgeschlagen, dass mindestens eines der Ventile monostabil ausgebildet ist.

Ein Ventilgrundzustand kann dadurch vorgegeben werden, dass mindestens eines der Ventile zur Definition einer Grundpositionierung eine Feder aufweist.

Gemäß einer Ausführungsform ist daran gedacht, dass das Einlassventil in einem Grundzustand geschlossen ist.

Ebenfalls ist es möglich, dass das Auslassventil in einem Grundzustand offen ist.

Gemäß einer weiteren Ausführungsform ist auch daran gedacht, dass die Heizpresse 1 mindestens ein von einem flüssigen Fluid gesteuertes Druckregelventil aufweist.

In den Zeichnungen sind Ausführungsbeispiele der Erfindung schematisch dargestellt. Es zeigen:
- Fig. 1: eine vereinfachte Darstellung einer Heizpresse am Beispiel einer Säulenheizpresse und
- Fig. 2: ein Schaltbild zur Veranschaulichung einer Ventilansteuerung bei Verwendung eines flüssigen Fluids.

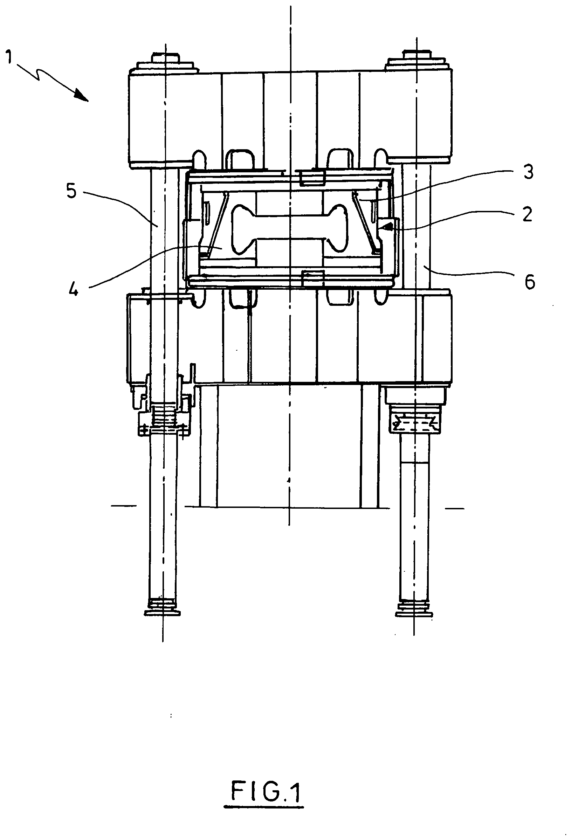

Figur 1 zeigt den konstruktiven Aufbau einer Heizpresse (1). Die Heizpresse (1) dient zur Vulkanisierung des Materials eines nichtdargestellten Rohreifens. Zur Aufnahme des Rohreifens besitzt die Heizpresse (1) eine Form (2), die aus einer oberen Formhälfte (3) und einer unteren Formhälfte (4) besteht. Beim dargestellten Ausführungsbeispiel ist die untere Formhälfte (4) unbeweglich angeordnet. Die obere Formhälfte (3) ist in einer vertikalen Richtung positionierbar. Durch eine entsprechende Positionierung der oberen Formhälfte (3) kann die Form (2) geöffnet und geschlossen werden.

Die Heizpresse (1) gemäß Figur 1 ist als eine Säulenheizpresse ausgebildet und besitzt Säulen (5, 6). Zur Positionierung der oberen Formhälfte (3) dienen Kolben (7, 8), die relativ zu Zylindern (9, 10) positionierbar sind.

Gemäß einer anderen Ausführungsform kann die Heizpresse (1) auch als eine Rahmenheizpresse realisiert werden.

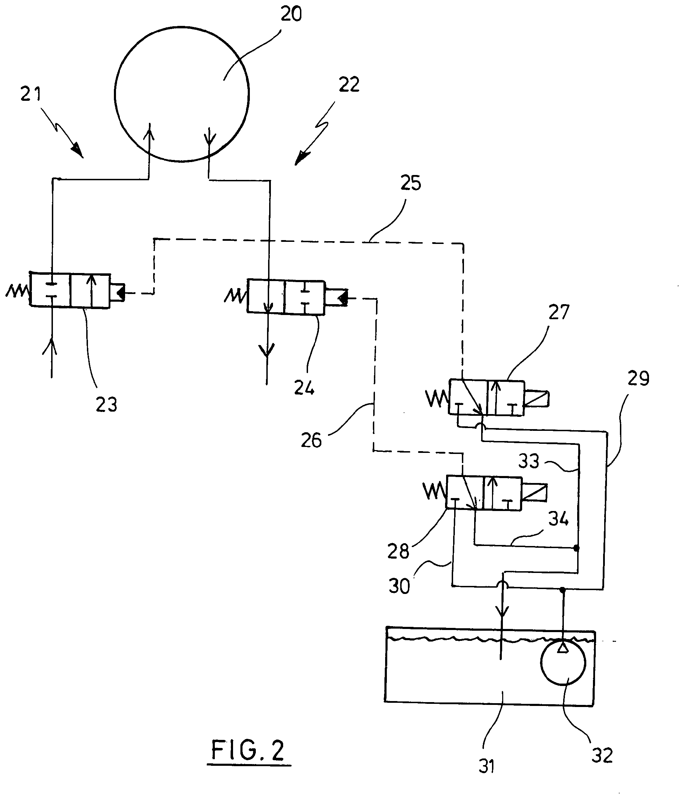

Figur 2 zeigt ein Blockschaltbild zur Veranschaulichung der Zuführung eines Heizmediums in den Bereich der Form (2), um dort die Vulkanisierung des Rohreifens durchzuführen.

Für die Durchführung des schematisch dargestellten Vulkanisierungsprozesses (20) werden ein Einlassbereich (21) und ein Auslassbereich (22) verwendet. In diesen Bereichen erfolgt eine Zuführung bzw. ein Auslass des benötigten Heizmediums.

Der Einlassbereich (21) ist mit einem Einlassventil (23) und der Auslassbereich (22) mit einem Auslassventil (24) versehen. Typischerweise sind die Ventile (23, 24) als monostabile Ventile ausgebildet.

Das Einlassventil (23) ist in einem Grundzustand ohne Beaufschlagung mit einem Steuermedium geschlossen. Das Auslassventil (23) ist ohne Beaufschlagung mit einem Steuerdruck offen. Die jeweilige Grundpositionierung der Ventile (23, 24) wird typischerweise durch die Verwendung einer Feder realisiert, gegen deren Kraft ein angelegter Steuerdruck arbeitet. Typischerweise sind derartige Federn als Druckfedern realisiert.

Das Einlassventil (23) besitzt eine Steuerleitung (25) und das Auslassventil (24) ist mit einer Steuerleitung (26) versehen.

An die Steuerleitung (25) ist ein Steuerventil (27) angeschlossen. Die Steuerleitung (26) ist mit einem Steuerventil (28) versehen.

Gemäß einer typischen Ausführungsform sind die Steuerventile (27, 28) als 3-/2-Wegeventile ausgebildet. Ebenfalls ist insbesondere daran gedacht, die Steuerventile (27, 28) elektrisch betätigt auszuführen.

Die Steuerventile (27, 28) sind über Versorgungsleitungen (29, 39) mit einem Tank (31) verbunden. Typischerweise wird ein im Tank (31) bevorratetes flüssiges Fluid durch eine Pumpe (32) in die Versorgungsleitungen (29, 39) befördert.

Eine Rückführung von flüssigem Fluid in den Tank (31) erfolgt über Rücklaufleitungen (33, 34).

## Patentansprüche

1. Vorrichtung zur Vulkanisierung von Reifenrohlingen, die mindestens eine beheizbare Form (2) zur Aufnahme des Reifenrohlings aufweist und die mindestens eine steuerbare Zufuhreinrichtung für ein Heizmedium aufweist, die mit mindestens einem Ventil (23, 24) versehen ist, **dadurch gekennzeichnet, dass** das Ventil (23, 24) eine von einem flüssigen Fluid betätigte Positioniereinrichtung aufweist, dass die Positioniereinrichtung eine Kolben-Zylinder-Anordnung aufweist, dass zur Förderung des flüssigen Fluids sowie für einen Druckaufbau eine Pumpe (32) verwendet ist, dass die Pumpe (32) mit einem Tank (31) gekoppelt ist und dass das mindestens eine Ventil (23, 24) mit einem Steuerventil (27, 28) gekoppelt ist, das als ein 3-/2-Wegeventil ausgebildet ist.

2. Vorrichtung nach Anspruch 1, **dadurch gekennzeichnet, dass** mindestens eines der Ventile (23, 24) monostabil ausgebildet ist.

3. Vorrichtung nach einem der Ansprüche 1 oder 2, **dadurch gekennzeichnet, dass** mindestens eines der Ventile (23, 24) zur Definition einer Grundpositionierung eine Feder aufweist.

4. Vorrichtung nach einem der Ansprüche 1 bis 3, **dadurch gekennzeichnet, dass** das Ventil (23) ein Einlassventil und in einem Grundzustand geschlossen ist.

5. Vorrichtung nach einem der Ansprüche 1 bis 4, **dadurch gekennzeichnet, dass** das Ventil (24) ein Auslassventil und in einem Grundzustand offen ist.

6. Vorrichtung nach einem der Ansprüche 1 bis 5, **dadurch gekennzeichnet, dass** die Heizpresse (1) mindestens ein von einem flüssigen Fluid gesteuertes Druckregelventil aufweist.

## Claims

1. Device for the vulcanization of tyre blanks, which has at least one heatable mould (2) for receiving the tyre blank and which has at least one controllable supply device for a heating medium, which is provided with at least one valve (23, 24), **characterized in that** the valve (23, 24) has a positioning device that is actuated by a liquid fluid, **in that** the positioning device has a piston-cylinder assembly, **in that** a pump (32) is used to deliver the liquid fluid and for a pressure buildup, **in that** the pump (32) is coupled to a tank (31), and **in that** the at least one valve (23, 24) is coupled to a control valve (27, 28), which is designed as a 3/2-way valve.

2. Device according to Claim 1, **characterized in that** at least one of the valves (23, 24) is of monostable design.

3. Device according to either of Claims 1 and 2, **characterized in that** at least one of the valves (23, 24) has a spring for the definition of a normal position.

4. Device according to one of Claims 1 to 3, **characterized in that** the valve (23) is an inlet valve and is closed in a normal state.

5. Device according to one of Claims 1 to 4, **characterized in that** the valve (24) is an outlet valve and is open in a normal state.

6. Device according to one of Claims 1 to 5, **characterized in that** the heating press (1) has at least one pressure control valve controlled by a liquid fluid.

## Revendications

1. Dispositif de vulcanisation d'ébauches de pneus, qui présente au moins un moule (2) pouvant être chauffé pour recevoir l'ébauche de pneu et qui présente au moins un appareil d'amenée commandable pour un agent chauffant, qui est pourvu d'au moins une soupape (23, 24), **caractérisé en ce que** la soupape (23, 24) présente un appareil de positionnement actionné par un fluide liquide, **en ce que** l'appareil de positionnement présente un agencement piston-cylindre, **en ce qu'**une pompe (32) est utilisée pour le transport du fluide liquide ainsi que pour une montée en pression, **en ce que** la pompe (32) est couplée à un réservoir (31) et **en ce que** l'au moins une soupape (23, 24) est couplée à une soupape de commande (27, 28) qui est réalisée sous la forme d'une soupape à 3/2 voies.

2. Dispositif selon la revendication 1, **caractérisé en ce qu'**au moins une des soupapes (23, 24) est réalisée sous forme monostable.

3. Dispositif selon l'une quelconque des revendications 1 ou 2, **caractérisé en ce qu'**au moins une des soupapes (23, 24) présente un ressort pour définir un positionnement de base.

4. Dispositif selon l'une quelconque des revendications 1 à 3, **caractérisé en ce que** la soupape (23) est une soupape d'admission et est fermée dans un état de base.

5. Dispositif selon l'une quelconque des revendications 1 à 4, **caractérisé en ce que** la soupape (24) est une soupape d'échappement et est ouverte dans un état de base.

6. Dispositif selon l'une quelconque des revendications 1 à 5, **caractérisé en ce que** la presse chauffante (1) présente au moins une soupape de régulation de pression commandée par un fluide liquide.
